Europäisches Patentamt

European Patent Office

Office européen des brevets

(11) Publication number: **0 157 041**
A1

## EUROPEAN PATENT APPLICATION

(21) Application number: 84307253.9

(22) Date of filing: 22.10.84

(51) Int. Cl.⁴: **C 03 B 37/14**, G 02 B 6/38

(30) Priority: 21.10.83 GB 8328238

(43) Date of publication of application: 09.10.85
Bulletin 85/41

(84) Designated Contracting States: AT BE CH DE FR IT LI
LU NL SE

(71) Applicant: BICC Limited, 21, Bloomsbury Street, London,
WC1B 3QN (GB)

(72) Inventor: McDonough, Martin Trevor, 11, Montfort Place,
London, SW19 (GB)

(74) Representative: Ross Gower, Edward Lewis et al, BICC
plc Patents Department 38 Ariel Way Wood Lane,
London W12 7DX (GB)

(54) Optical fibre splicing.

(57) In apparatus comprising optical fibre aligning equipment and optical fibre fusion splicing equipment (1), the
means for effecting operation of the optical fibre aligning
equipment and the means for effecting operation of the
optical fibre fusion splicing equipment are mounted in a
hand-held control unit (3) connected to the equipment by a
flexible electric ribbon cable (2). Since the operating means
of the apparatus is remote from the vicinity of the fusion
splice, any risk that handling or touching of the apparatus
by an operator and/or movement of an operator in the
vicinity of the fusion splice may result in sufficient vibration
to cause dis-alignment of the optical fibres is substantially
eliminated.

OPTICAL FIBRE SPLICING   0157041

This invention relates to end-to-end fusion splicing of optical fibres and especially, but not exclusively, to end-to-end fusion splicing of single mode optical fibres.

Many techniques differing from one another have been proposed for effecting an end-to-end fusion splice between optical fibres and, in all of these fusion splicing techniques, apparatus is employed which includes equipment for aligning the optical fibres to be spliced and equipment for effecting the fusion splice. For a satisfactory fusion splice to be obtained, it is imperative that throughout the splicing operation the optical fibres are held with their axes co-linear. We have found, especially where the optical fibres to be spliced are single mode optical fibres, that any slight vibration to which the aligned optical fibres may be subjected prior to and/or during effecting the fusion splice may result in slight movement of one or both optical fibres so that their axes are no longer co-linear.

It is an object of the present invention to provide, for effecting an end-to-end fusion splice between optical fibres, improved apparatus which substantialy reduces the risk that dis-alignment of the optical fibres may occur during the fusion splicing operation as a result of vibration and which is especially suitable for use in the field.

According to the invention, in the improved apparatus comprising optical fibre aligning equipment and optical fibre fusion splicing equipment, at least the means for effecting operation of the optical fibre fusion splicing equipment is of such a form that it can be actuated at a position remote from the vicinity of the fusion splice.

Preferably, the means for effecting operation of the optical fibre aligning equipment and the means for effecting operation of the optical fibre fusion splicng equipment are of such a form that they can be activated at a position remote from the vicinity of the fusion splice.

The operating means of the optical fibre fusion splicing equipment, or the operating means of the optical fibre aligning and fusion splicing equipment, preferably is or are mounted in a hand-held control unit and is or are connected to the equipment by at least one length of electric cable or is or are of such a form that the equipment can be activated by infra-red raditaion or other remotely-controlled means.

Since the operating means of the apparatus can be remote from the vicinity of the fusion splice, any risk that handling or touching of the apparatus by an

0157041

operator and/or movement of an operator in the vicinity of the fusion splice may result in sufficient vibration to cause dis-alignment of the optical fibres is substantially eliminated.

The invention is further illustrated by a description, by way of example, of a preferred hand-held control unit for use in improved apparatus for effecting an end-to-end fusion splice between optical fibres with reference to the accompanying drawing, in which:-

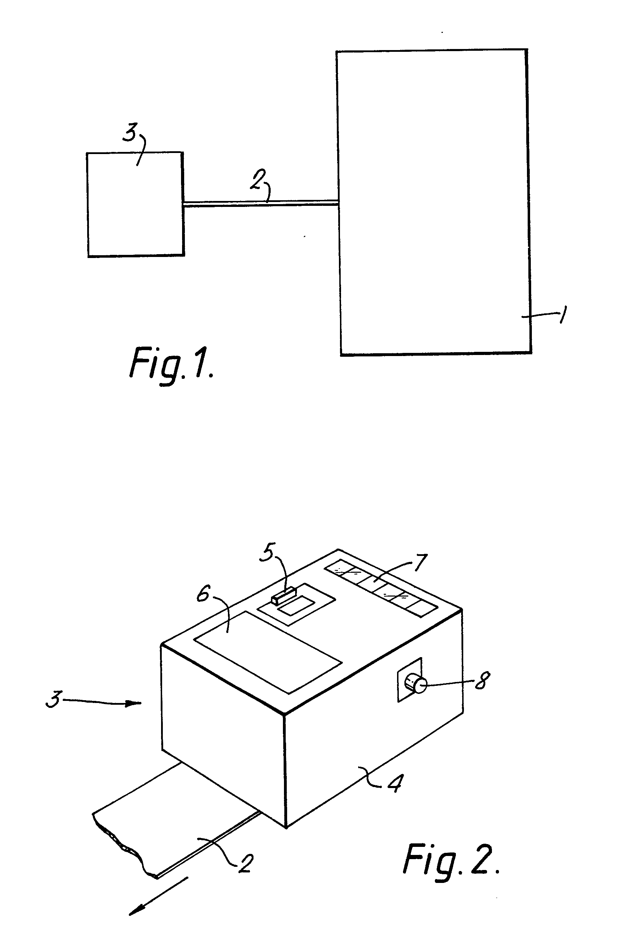

Figure 1 is a schematic representation of the improved apparatus, and

Figure 2 is a perspective view of the preferred hand-held control unit.

Referring to the drawing, the improved apparatus comprises optical fibre aligning equipment and optical fibre fusion splicing equipment indicated by the block 1 and, connected to the equipment by a flexible electric ribbon cable 2, a hand-held control unit 3.

The control unit 3 comprises a housing 4 of electrically insulating material in which is mounted a switch 5 for selecting any one of ten programmes for automatically aligning and subsequently fusion splicing two optical fibres, each of the programmes being specific to optical fibres of a particular size and of a particular material and type.

0157041

A monitor 6 provides a digital indication when the alignment of the two optical fibres is at an optimum and light emissive devices 7 provide visual indications of the various stages reached in the optical fibre aligning and fusion splicing processes. When a programme appropriate to the optical fibres to be spliced has been selected by use of the switch 5, the hand-held control unit is activated by a control switch 8.

0157041

CLAIMS:

1.   For effecting an end-to-end fusion splice between optical fibres, apparatus comprising optical fibre aligning equipment and optical fibre fusion splicing equipment, wherein the means for effecting operation of the optical fibre fusion splicing equipment is of such a form that it can be actuated at a position remote from the vicinity of the fusion splice.

2.   For effecting an end-to-end fusion splice between optical fibres, apparatus comprising optical fibre aligning equipment and optical fibre fusion splicing equipment, wherein the means for effecting operation of the optical fibre aligning equipment and the optical fibre fusion splicing equipment are of such a form that they can be activated at a position remote from the vicinity of the fusion splice.

3.   Apparatus as claimed in Claim 1 or 2, wherein the operating means of the optical fibre fusion splicing equipment, or the operating means of the optical fibre aligning and fusion splicing equipment, is or are mounted in a hand-held control unit and is or are connected to the equipment by at least one length of electric cable.

4.    Apparatus as claimed in Claim 1 or 2, wherein the operating means of the optical fibre fusion splicing equipment, or the operating means of the optical fibre aligning and fusion splicing equipment, is or are of such a form that the equipment can be activated by infra-red radiation or other remotely-controlled means.

5.    For effecting an end-to-end fusion splice between optical fibres, apparatus comprising optical fibre aligning equipment, optical fibre fusion splicing equipment and, for effecting operation of the optical fibre aligning and fusion splicing equipment, a hand-held control unit substantially as hereinbefore described with reference to and as shown in Figure 2 of the accompanying drawing.

0157041

1/1

*Fig.1.*

*Fig. 2.*

European Patent Office

# PARTIAL EUROPEAN SEARCH REPORT

which under Rule 45 of the European Patent Convention
shall be considered, for the purposes of subsequent
proceedings, as the European search report

0157041

EP 84 30 7253

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| | ELECTRONICS LETTERS, vol. 18, no.16 5th August 1982, pages 697-698 J.S. LEACH et al.: "Low-loss splicing of a 62.4 km single-mode-fibre link" | | C 03 B 37/14 C 02 B 6/38 |
| X | * Paragraph"Splicing equipment", figure 1 * | 1 | |
| A | | 2,3 | |
| | -- | | |
| | ELECTRICAL COMMUNICATIONS, vol. 56, no. 4, 1981, pages 358-363 J.D. ARCHER et al.: "Optical fiber technology connectors and splices" | | |
| X | * Paragraph "Jointing single-mode fiber cable"; photograph page 362 * | 1 | |
| A | | 2,3 | **TECHNICAL FIELDS SEARCHED (Int. Cl.4)** |
| | -- | | |
| A | APPLIED OPTICS, vol. 17, no. 12, ./. | | C 02 B C 03 B |

## INCOMPLETE SEARCH

The Search Division considers that the present European patent application does not comply with the provisions of the European Patent Convention to such an extent that it is not possible to carry out a meaningful search into the state of the art on the basis of some of the claims.

Claims searched completely: 1-4

Claims searched incompletely:

Claims not searched: 5

Reason for the limitation of the search: Claim 5 contains...."as hereinbefore described with reference to as shown in figure 2 of the accompanying drawing". This contrary to what is laid down in Rule 29(6) in the European Patent Convention.

| Place of search | Date of completion of the search | Examiner |
|---|---|---|
| The Hague | 24-06-1985 | MORRELL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1505.1.03.82

| | DOCUMENTS CONSIDERED TO BE RELEVANT | | CLASSIFICATION OF THE APPLICATION (Int. Cl.4.) |
|---|---|---|---|
| Category | Citation of document with indication, where appropriate, of relevant passages | Relevant to claim | |
| | 15th June 1978, pages 1959-1964 I. HATAKEYAMA et al.: "Fusion splices for optical fibers by discharge heating" <br><br> * Paragraph II: "Apparatus"; figure 1 * <br><br> -- | 1 | |
| X | WO - A - 83/04409 (HUGHES AIRCRAFT CO.) <br><br> * Page 7, line 21 - page 8, line 8; figure 3 * <br><br> ------- | 2 | TECHNICAL FIELDS SEARCHED (Int. Cl.4) |

EPO Form 1505.3 06.78